(19) Europäisches Patentamt
European Patent Office
Office européen des brevets

(11) **EP 1 858 739 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **06725108.2**

(22) Anmeldetag: **16.03.2006**

(51) Int Cl.:
***B60W 30/18*** *(2006.01)*

(86) Internationale Anmeldenummer:
**PCT/EP2006/060797**

(87) Internationale Veröffentlichungsnummer:
**WO 2006/097511 (21.09.2006 Gazette 2006/38)**

(54) **KUPPLUNGSSTEUERUNG ZUM AUFLÖSEN EINER ZAHN-AUF-ZAHN-STELLUNG EINES KRAFTFAHRZEUGGETRIEBES**

TOOTH-ON-TOOTH POSITION CLUTCH CONTROL FOR RELEASING A TOOTH-ON-TOOTH POSITION OF A MOTOR VEHICLE GEARBOX

COMMANDE D'EMBRAYAGE POUR LA LIBÉRATION D'UNE POSITION DENT SUR DENT D'UNE BOÎTE DE VITESSES DE VÉHICULE À MOTEUR

(84) Benannte Vertragsstaaten:
**DE FR GB SE**

(30) Priorität: **17.03.2005 DE 102005012308**

(43) Veröffentlichungstag der Anmeldung:
**28.11.2007 Patentblatt 2007/48**

(73) Patentinhaber: **Daimler AG**
**70327 Stuttgart (DE)**

(72) Erfinder:
• **BARTELS, Ulrich**
**70565 Stuttgart (DE)**

• **GUGGOLZ, Manfred**
**71277 Rutesheim (DE)**
• **HILLENBRAND, Werner**
**72639 Neuffen (DE)**
• **SCHNEEBERGER, Erwin**
**A-8042 Graz (AT)**

(74) Vertreter: **JENSEN & SON**
**366-368 Old Street**
**London EC1V 9LT (GB)**

(56) Entgegenhaltungen:
EP-A- 0 431 677    EP-A- 0 512 727
DE-A- 10 155 459    DE-A- 19 709 419
DE-A- 19 731 842    US-B2- 6 769 523

**Beschreibung**

Die Erfindung betrifft eine Kraftfahrzeuggetriebesteuervorrichtung nach dem Oberbegriff des Anspruchs 1 und ein Verfahren zum Betätigen eines Kraftfahrzeuggetriebes nach dem Oberbegriff des Anspruchs 11.

Aus der US 6,769,523 B2 ist eine solche Kraftfahrzeuggetriebesteuervorrichtung bekannt, die ein Mittel zum Herstellen und/oder Lösen eines Eingriffs einer Verzahnung eines Kraftfahrzeuggetriebes umfasst. Ferner weist die Kraftfahrzeuggetriebesteuervorrichtung eine Steuereinheit zum Betätigen einer Kupplung auf, wobei die Kupplung zum Übertragen eines Drehmoments auf eine erste Komponente der Verzahnung geeignet ist. Die Steuereinheit ist durch eine geeignete Programmierung dazu vorgesehen, die Kupplung zum Auflösen einer Zahn-auf-Zahn-Stellung der Verzahnung kurzfristig auf wenigstens eine gespeicherte Kupplungssollstellung zu verstellen, in der die Kupplung einen leichten Drehmomentpuls auf die erste Komponente der Verzahnung überträgt. Dazu erhöht die Steuereinheit die Kupplungssollstellung schrittweise, bis die Kupplung greift und bis die Zahn-auf-Zahn-Stellung aufgelöst ist.

Der Erfindung liegt die Aufgabe zugrunde, eine Vorrichtung bereitzustellen, mittels der eine Zahn-auf-Zahn-Stellung der Verzahnung besonders schnell und ohne Komfortverluste aufgelöst werden kann.

Diese Aufgabe wird mit der Vorrichtung nach Anspruch 1 gelös.t

Die Erfindung geht aus von einer Kraftfahrzeuggetriebesteuervorrichtung mit einem Mittel zum Herstellen und/oder Lösen eines Eingriffs einer Verzahnung eines Kraftfahrzeuggetriebes sowie mit einer Steuereinheit zum Betätigen einer Kupplung, wobei die Kupplung zum Übertragen eines Drehmoments auf eine erste Komponente der Verzahnung geeignet ist und wobei die Steuereinheit dazu vorgesehen ist, die Kupplung zum Auflösen einer Zahn-auf-Zahn-Stellung der Verzahnung kurzfristig auf wenigstens eine gespeicherte Kupplungssollstellung zu verstellen, in der die Kupplung einen Drehmomentpuls auf die erste Komponente der Verzahnung überträgt.

Es wird vorgeschlagen, dass die Steuereinheit dazu vorgesehen ist, die Kupplungssollstellung für einen ersten Puls nach Erkennen einer Zahn-auf-Zahn-Stellung abhängig von einem durch ein Steuersignal der Steuereinheit ausgelösten Reaktionssignal des Kraftfahrzeuggetriebes zu adaptieren. Dadurch kann erreicht werden, dass die Steuereinheit die gespeicherte Kupplungssollstellung selbsttätig an einen Verschleißgrad der Kupplung und/oder an andere veränderliche Faktoren anpasst. Ein schrittweises Herantasten an eine optimale Kupplungssollstellung kann vorteilhaft zumindest verkürzt werden, so dass eine erkannte Zahn-auf-Zahn-Stellung schnell aufgelöst werden kann. Ferner kann gewährleistet werden, dass eine Stärke des übertragenen Drehmomentpulses stets nahe an einer minimalen, zum Herstellen der des Eingriffs der Verzahnung notwendigen Stärke liegt, so dass ein unkomfortables und verschleißförderndes Rucken des Kraftfahrzeuggetriebes vermieden werden kann. Dadurch kann ein Schaltkomfort erhöht werden.

Unter "vorgesehen" soll in diesem Zusammenhang auch "ausgelegt" und "ausgestattet" verstanden werden. Ein Drehmomentpuls kann durch ein zeitlich begrenztes Schließen der Kupplung erreicht werden, wobei ein Zeitintegral über den Betrag des übertragenen Drehmoments als "Stärke" des Drehmomentpulses bezeichnet werden soll. Eine Adaption der Kupplungssollstellung bzw. einer Kenngröße für diese erfolgt durch eine Veränderung eines gespeicherten Werts oder Grundwerts für die Kupplungssollstellung und beinhaltet eine dauerhafte Speicherung des geänderten Werts bis zu seiner nächsten Veränderung. Nutzt die Steuereinheit eine Folge von Drehmomentpulsen mit verschiedenen Stärken und Kupplungssollstellungen, kann sowohl die Stärke eines einzelnen Pulses als auch die Stärke aller Pulse einer adaptiven Anpassung unterworfen sein. Die Adaption kann ständig während eines Normalbetriebs eines die Kraftfahrzeuggetriebesteuervorrichtung umfassenden Kraftfahrzeugs erfolgen oder in einem gesonderten Adaptionsbetrieb, der beispielsweise immer unmittelbar nach einer Zündung eines Antriebsaggregats durchgeführt werden kann. Das Mittel kann beispielsweise manuell, hydraulisch, pneumatisch oder elektromagnetisch betätigbar sein. Die Kraftfahrzeuggetriebesteuervorrichtung kann den Betrieb des Kraftfahrzeuggetriebes zumindest in Teilen auch regeln.

In einer Weiterbildung der Erfindung wird vorgeschlagen, dass die Steuereinheit dazu vorgesehen ist, die einem Drehmomentpuls zugeordnete Kupplungssollstellung schrittweise zu erhöhen, bis das Reaktionssignal des Kraftfahrzeuggetriebes einen Schwellenwert überschreitet. Dadurch kann erreicht werden, dass die Zahn-auf-Zahn-Stellung sicher gelöst wird, ohne dass eine zu große Stärke des erfolgreichen Drehmomentpulses zu Komfortverlusten durch ein Rucken führen könnte.

Umfasst die Kraftfahrzeuggetriebesteuervorrichtung eine Speichereinheit zum Speichern eines beim Überschreiten des Schwellenwerts vorliegenden Kupplungswegs bzw. einer Kenngröße für einen Kupplungsweg kann die Steuereinheit den gespeicherten Kupplungsweg als adaptierte Kupplungssollstellung zum Auflösen der nächsten Zahn-auf-Zahn-Stellung nutzen. Ein voreiliges Anpassen der gespeicherten Kupplungssollstellung kann vermieden werden, wenn die Adaption mehrere Lösevorgänge bzw. die in den Lösevorgängen erfolgreichen Kupplungswege zur Adaption nutzt.

Ferner wird vorgeschlagen, dass die Steuereinheit dazu vorgesehen ist, ein Maß des Drehmomentpulses abhängig von einem Betriebszustand des Kraftfahrzeuggetriebes zu bestimmen. Als Maß des Drehmomentpulses kommen seine Länge und seine Höhe in Betracht, wobei die Höhe über die Kupplungssollstellung einstellbar ist. Es kann vorteilhaft zwischen einem Standbetrieb, einem Testbetrieb und einem Fahrbetrieb des Kraftfahrzeugs unterschieden werden, wobei insbesondere im Standbetrieb der Drehmomentpuls zum Vermeiden eines ungewollten Vortriebs des Kraftfahrzeugs besonders vorsichtig dosiert werden sollte. Um in einem Testbetrieb ein genaues Bestimmen der Kupplungssollstellung bzw. eines "Kisspoints" der Kupplung zu ermöglichen, sollten Erhöhungsschritte in diesem Fall besonders klein sein. Dies ist dann erreichbar, wenn die Steuereinheit dazu vorgesehen ist, eine Größe bzw. einen Wert eines Erhöhungsschritts abhängig von einem Betriebszustand des Kraftfahrzeuggetriebes zu bestimmen. Insbesondere in einem Sicherheitsmodus können die Erhöhungsschritte vorteilhaft einen verringerten, d.h. einen gegenüber den in einem Normalbetrieb gewählten Werten kleineren Wert, annehmen. Durch eine Adaption der Kupplungssollstellung in einem Sicherheitsmodus kann ein mit Komfortverlusten einhergehendes Rucken während des Adaptionsvorgangs vermieden werden.

Ein zur Steuerung der Kupplung genutzter, adaptiver Greifpunkt der Kupplung kann vorteilhaft zum erleichterten Ermitteln der Kupplungssollstellung genutzt werden. Der Greifpunkt ist aber von der Kupplungssollstellung verschieden, da am Greifpunkt bereits ein zu starker Reibschluss zwischen Reibkörpern der Kupplung besteht.

Eine fehlerhafte Adaption, die beispielsweise durch eine Fehlfunktion eines die Kupplung betätigenden Aktuators auftreten kann, kann vermieden werden, wenn die Steuereinheit einen Testwert der Kupplungssollstellung abhängig von dem Reaktionssignal des KraftfahrzeuggetrieLes bewertet. Dadurch können fehlerhaft angesteuerte Drehmomentpulse erkannt werden.

Ein besonders präzise angesteuerter Drehmomentpuls kann erreicht werden, wenn die Steuereinheit dazu vorgesehen ist, eine Temperatur der Kupplung zu erfassen und die Kupplungssollstellung abhängig von der erfassten Temperatur zu korrigieren.

Eine stets gut an einen Verschleiß der Kupplung adaptierte Steuereinheit kann auch dann gewährleistet werden, wenn eine Adaption im Betrieb wegen fehlender und/oder zu kurzer Leerlaufphasen nicht möglich erscheint, wenn die Steuereinheit dazu vorgesehen ist, die Kupplungssollstellung selbsttätig in einem Testvorgang zu adaptieren. Die Steuereinheit kann den Testvorgang besonders vorteilhaft immer unmittelbar nach einem Start des Kraftfahrzeugs beginnen.

Ferner besteht die Erfindung aus einem Verfahren nach Anspruch 11, zum Betätigen eines Kraftfahrzeuggetriebes mit einem Mittel zum Herstellen und/oder Lösen eines Eingriffs einer Verzahnung des Kraftfahrzeuggetriebes, wobei über eine Steuereinheit eine Kupplung betätigt wird, wobei die Kupplung zum Übertragen eines Drehmoments auf eine Komponente der Verzahnung geeignet ist und wobei zum Auflösen einer Zahn-auf-Zahn-Stellung der Verzahnung die Kupplung zum Erzeugen eines Drehmomentpulses kurzfristig, d.h. für etwa 100 - 500 ms, auf eine Kupplungssollstellung verstellt wird.

Es wird vorgeschlagen, dass ein Reaktionssignal des Kraftfahrzeuggetriebes auf ein Steuersignal der Steuereinheit erfasst wird und die Kupplungssollstellung abhängig von dem Reaktionssignal adaptiert wird. Dadurch kann ein schnelles Lösen einer Zahn-auf-Zahn-Stellung ohne Komfortverluste erreicht werden.

Weitere Vorteile ergeben sich aus der folgenden Zeichnungsbeschreibung. In der Zeichnung ist ein Ausführungsbeispiel der Erfindung dargestellt.

Dabei zeigen:

Fig. 1     einen Triebstrang eines Kraftfahrzeugs mit einem Kraftfahrzeuggetriebe, einer Kupplung und einer Kraftfahrzeuggetriebesteuervorrichtung,

Fig. 2     ein Getriebeschema des Kraftfahrzeuggetriebes aus Figur 1,

Fig. 3     einen zeitlichen Verlauf eines angesteuerten Kupplungswegs während eines Vorgangs zum Ermitteln einer Kupplungssollstellung zum Erzeugen eines Drehmomentpulses bei stehendem Kraftfahrzeug,

Fig. 4     einen zeitlichen Verlauf eines angesteuerten Kupplungswegs während eines Vorgangs zum Ermitteln einer Kupplungssollstellung zum Erzeugen eines Drehmomentpulses bei fahrendem Kraftfahrzeug und

Fig. 5     einen zeitlichen Verlauf eines angesteuerten Kupplungswegs während eines Vorgangs zum Ermitteln einer Kupplungssollstellung zum Erzeugen eines Drehmomentpulses in einem Sicherheitsmodus.

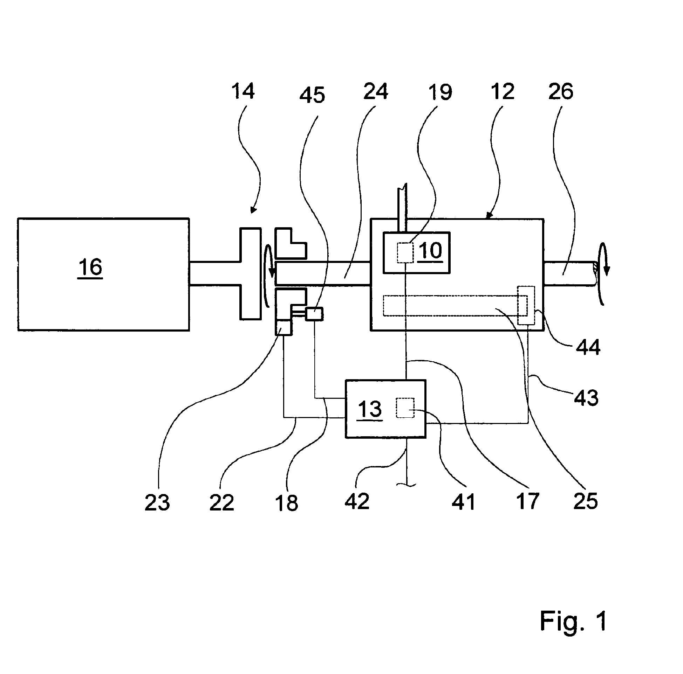

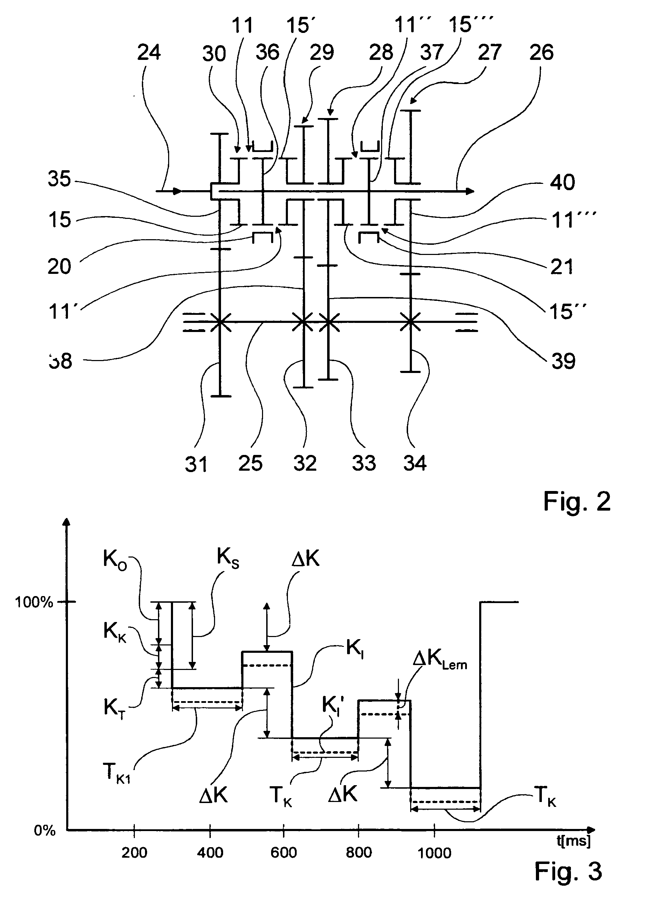

Figur 1 zeigt einen Triebstrang eines Kraftfahrzeugs in einer schematischen Darstellung. Der Triebstrang umfasst eine Brennkraftmaschine 16, ein als unsynchronisiertes Klauengetriebe ausgebildetes Kraftfahrzeuggetriebe 12 und eine zwischen die Brennkraftmaschine 16 und das Kraftfahrzeuggetriebe 12 geschaltete Kupplung 14, die eine Drehmomentübertragung zwischen der Brennkraftmaschine 16 und dem Kraftfahrzeuggetriebe 12 herstellen und lösen kann. Das Kraftfahrzeuggetriebe 12 ist mit einer Steuereinheit 13 ausgestattet, die über eine Sensorleitung 17 mit einem Sensor 19 kommuniziert, der eine Stellung von Schaltgabeln 20, 21 bzw. einer manuell betätigbaren Schaltwalze des Kraftfahrzeuggetriebes 12 erfasst. (Figur 2). Die Schaltwalze bildet ein Mittel 10 zum Herstellen und Lösen eines Eingriffs von Verzahnungen 11 - 11'" des Kraftfahrzeuggetriebes.

Über eine Steuerleitung 18 ist die Steuereinheit 13 dazu ausgelegt, einen Aktuator 45 der Kupplung 14 zu betätigen. Ferner erfasst die Steuereinheit 13 über eine Sensorleitung 22 und einen Sensor 23 eine Temperatur der Kupplung 14 und einen tatsächlich an der Kupplung 14 eingestellten Kupplungsweg, d.h. eine axiale Lage eines verschiebbar auf einer Welle gelagerten Teils der Kupplung 14.

Das Kraftfahrzeuggetriebe 12 umfasst eine Eingangswelle 24, von der aus es ein Drehmoment über eine Vorgelegewelle 25 auf eine Ausgangswelle 26 überträgt, die mit Rädern eines den Triebstrang umfassenden Kraftfahrzeugs verbunden ist. Das Kraftfahrzeuggetriebe 12 weist vier Gänge 27 - 30 und einen hier nicht dargestellten Rückwärtsgang auf.

Über eine weitere Sensorleitung 43 und einen Sensor 44 erfasst die Steuereinheit 13 eine Drehzahl der Vorgelegewelle 25.

Vier Zahnräder 31 - 34 sind fest mit der Vorgelegewelle 25 verbunden. Das Zahnrad 31 kämmt ständig mit einem fest mit der Eingangswelle 24 verbundenen Zahnrad 35, während die Zahnräder 32 - 34 jeweils ständig mit einem axial fest, aber drehbar mit der Ausgangswelle 26 verbundenen Zahnrad 38 - 40 kämmen.

Die Schaltgabeln 20, 21 greifen jeweils in eine Außennut eines drehfest, aber axial verschiebbar mit der Ausgangswelle 26 verbundenen Schaltrings 36, 37 ein, so dass die Schaltringe 36, 37 über die Schaltgabeln 20, 21 axial auf der Ausgangswelle 26 verschoben werden können. Die Schaltringe 36, 37 weisen an beiden axialen Seiten eine umlaufende Reihe von Klauen auf, die durch axiales Verschieben der Schaltringe 36, 37 in die eine oder in die andere Richtung in formschlüssigen Eingriff mit einer korrespondierenden Klauenstruktur an einem der Zahnräder 34, 38 - 40 gebracht werden können, die eine Komponente 15 - 15''' einer Verzahnung 11 - 11''' bildet.

Werden die Schaltringe 36, 37 verschoben, um die Verzahnungen 11 - 11''' in Eingriff zu bringen, kann es vorkommen, dass die Klauen der Schaltringe 36, 37 an den Klauen der Zahnräder 34, 38 - 40 zur Anlage kommen, anstatt, wie zum Herstellen eines Eingriffs notwendig, in Zwischenräume zwischen den Klauen zu gleiten. Es liegt dann eine Zahn-auf-Zahn-Stellung vor. Die Steuereinheit 13 erkennt die Zahn-auf-Zahn-Stellung dadurch, dass das Signal des Sensors 19 einen Sollwert nicht erreicht.

Zum Auflösen der Zahn-auf-Zahn-Stellung startet die Steuereinheit 13 dann einen als Programm in der Steuereinheit 13 implementierten Ablauf, bei dem die Steuereinheit 13 über die Steuerleitung 18 und den Aktuator 45 die Kupplung 14 kurzfristig auf eine Kupplungssollstellung $K_S$ verstellt, in der die Reibelemente der Kupplung 14 sich leicht berühren und in der die Kupplung 14 unmittelbar oder über die Vorgelegewelle 25 einen Drehmomentpuls auf die Komponenten 15 - 15''' der Verzahnungen 11 - 11''' überträgt. Dadurch verdrehen sich die Klauenstrukturen der Zahn-auf-Zahn liegenden Verzahnung 11 - 11''' leicht gegeneinander, bis die Klauenstruktur des entsprechenden Schaltrings 36, 37 in die mit dem entsprechenden Zahnrad 34, 38 - 40 verbundene Komponente 15 - 15''' der Verzahnung 11 - 11''' gleitet und ein Eingriff der Verzahnung 11 - 11''' hergestellt ist.

Eine konkrete Ausgestaltung des Ablaufs hängt von einem Betriebszustand des Kraftfahrzeuggetriebes 12 bzw. des das Kraftfahrzeuggetriebe 12 umfassenden Kraftfahrzeugs ab.

Figur 3 zeigt den zeitlichen Verlauf des über den Aktuator 45 angesteuerten Sollkupplungswegs $K_I$ während eines Ablaufs zum Ermitteln der Kupplungssollstellung $K_S$ bei stehendem Kraftfahrzeug. Der Ablauf dient zum Auflösen einer über den Sensor 19 erfassten Zahn-auf-Zahn-Stellung. Die Steuereinheit 13 startet den dargestellten Ablauf jedes Mal, nachdem eine Zahn-auf-Zahn-Stellung erkannt wurde. Zunächst ist die Kupplung 14 geöffnet und die Eingangswelle 24, die Vorgelegewelle 25 und die Ausgangswelle 26 stehen still. Zum Starten des Ablaufs liest die Steuereinheit 13 einen gespeicherten Wert der Kupplungssollstellung $K_S$ aus einer Speichereinheit 41 der Steuereinheit 13 aus. Die gespeicherte Kupplungssollstellung $K_S$ setzt sich aus einem Grundwert $K_0$ und aus einem Korrekturwert $K_K$ zusammen:

$$K_S = K_0 + K_K.$$

Anschließend ermittelt die Steuereinheit 13 über den Sensor 23 die Temperatur der Kupplung 14 und liest aus einem in der Speichereinheit 41 gespeicherten Kennfeld einen Temperaturaufschlag $K_T$ aus. Dann fährt die Kupplung 14 schnell zu, bis der Kupplungsweg gleich der Summe aus der Kupplungssollstellung $K_S$ und dem Temperaturaufschlag $K_T$ ist. Nach dem Ablauf einer in der Speichereinheit gespeicherten Pulsdauer $T_{K1}$ von etwa 215 ms fährt die Steuereinheit 13 die Kupplung 14 zurück auf einen Sollkupplungsweg $K_I$ mit einem Wert $\Delta K$ und beendet damit einen ersten Puls. Haben die Reibkörper der Kupplung 14 sich berührt und ist dadurch ein Drehmomentpuls auf die Vorgelegewelle 25 und die Komponenten 15 - 15''' übertragen worden, der die Zahn-auf-Zahn-Stellung aufgelöst hat, so bricht die Steuereinheit 13 den Ablauf ab. Erkennt die Steuereinheit 13 dagegen durch den Sensor 19 auch weiterhin eine Zahn-auf-Zahn-Stellung, erzeugt die Steuereinheit 13 einen zum ersten Puls analogen, um den Wert $\Delta K$ höheren Puls mit einer in der Speichereinheit 41 gespeicherten Pulsdauer $T_K$ von 200 ms.

Die Höhe der Pulse wird anschließend schrittweise jeweils um den Wert $\Delta K$ erhöht, bis die Zahn-auf-Zahn-Stellung aufgelöst ist und ein Gang eingelegt ist, bis ein Fahrer den Schaltvorgang abbricht, bis die Steuereinheit 13 über einen CAN-Bus 42 ein Abbruchsignal empfängt oder bis eine maximale Zahl von Pulsen bzw. ein maximaler Sollkupplungsweg $K_I$ erreicht ist.

Wurde die Zahn-auf-Zahn-Stellung nicht durch den ersten, sondern durch einen weiteren Puls aufgelöst oder erfasst die Steuereinheit 13 über den Sensor 44 nach einem der weiteren Pulse oder während eines der weiteren Pulse einen Drehmomentpuls auf der Vorgelegewelle 25, so erhöht die Steuereinheit 13 den Korrekturwert $K_K$ um ein Vielfaches eines Inkrements $\Delta K_{Lern}$, so dass bei einem nächsten Start des Ablaufs die Kupplungssollstellung $K_S$ abzüglich des Temperaturaufschlags $K_T$ gegenüber dem aktuellen Ablauf leicht erhöht ist. In Figur 3 ist als gestrichelte Linie ein adaptierter Kupplungsweg $K_I'$ dargestellt, bei dem der Korrekturwert $K_K$ um das Inkrement $\Delta K_{Lern}$ erhöht wurde. Ist N die Anzahl der zum Auflösen der Zahn-auf-Zahn-Stellung nötigen Pulse, so beträgt der veränderte Korrekturwert $K_K'$:

$$K_K' = K_K + (N-1)\Delta K_{Lern}.$$

Die Steuereinheit 13 adaptiert dadurch die Kupplungssollstellung $K_S = K_0 + K_K'$ abhängig von einem von dem Sensor 19 erfassten Reaktionssignal. Das Reaktionssignal wird durch ein an den Aktuator 45 ausgegebenes Steuersignal von der Steuereinheit 13 ausgelöst. Die Steuereinheit 13 lernt dadurch eine optimierte, neue Kupplungssollstellung $K_S$, die an einen Verschleiß der Kupplung 14 angepasst ist.

Die Steuereinheit 13 erkennt den Drehmomentpuls durch einen positiven Gradienten der Drehzahl der Vorgelegewelle 25 und durch eine positive Gesamtänderung der Drehzahl während des Ablaufs. Die Gesamtänderung muss einen gespeicherten Schwellenwert übertreffen.

Erfasst die Steuereinheit 13 nach dem Auflösen der Zahn-auf-Zahn-Stellung durch den ersten Puls Schwingungen im Signal des Sensors 44 bzw. in der Drehzahl der Vorgelegewelle 25, so erkennt die Steuereinheit 13, dass der Drehmomentpuls zu stark war und reduziert die Kupplungssollstellung $K_S$ bzw. den Korrekturwert $K_K$ um das Inkrement $\Delta K_{Lern}$. Dadurch adaptiert die Steuereinheit 13 die Kupplungssollstellung $K_S$ für den nächsten Ablauf selbsttätig. Erfasst die Steuereinheit 13 dagegen nach dem Auflösen der Zahn-auf-Zahn-Stellung durch den zweiten Puls Schwingungen im Signal des Sensors 44 bzw. in der Drehzahl der Vorgelegewelle 25, erfolgt keine Veränderung, also weder eine Erhöhung noch eine Reduktion des Korrekturwerts $K_K$.

In den meisten Fällen löst die Steuereinheit 13 die Zahn-auf-Zahn-Stellung bereits durch den ersten Puls auf. Eine Adaption der Kupplungssollstellung $K_S$ bzw. des Korrekturwerts $K_K'$ erfolgt nur dann, wenn eine durch den Sensor 23 erfasste Kupplungsstellung der Kupplung im Rahmen eines in der Speichereinheit 41 gespeicherten Toleranzbands dem angesteuerten Sollkupplungsweg $K_I$ entspricht. Dazu überprüft die Steuereinheit 13 nach dem Ablauf einer in der Speichereinheit 41 gespeicherten Zeitspanne von beispielsweise 80 ms, ob die erfasste Kupplungsstellung einen gespeicherten Prozentsatz, beispielsweise 80%, des angesteuerten Sollkupplungswegs $K_I$ bzw. der Höhe des Pulses erreicht hat. Die Steuereinheit 13 bewertet dadurch einen Testwert der Kupplungssollstellung $K_S$ abhängig von einem Reaktionssignal.

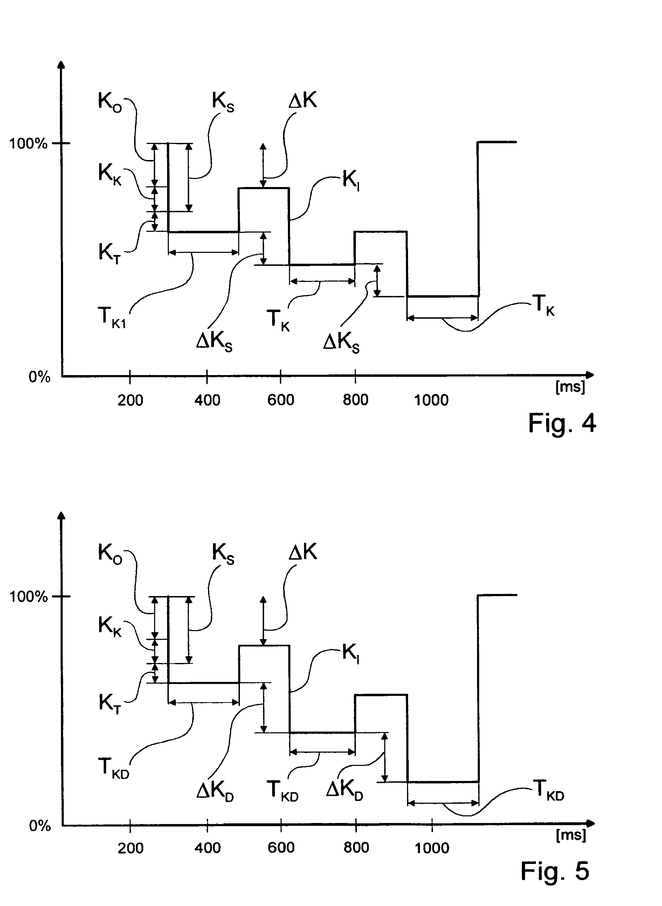

Die Figuren 4 und 5 zeigen den Verlauf des Sollkupplungswegs $K_I$ in weiteren Betriebszuständen des Kraftfahrzeugs. In der Beschreibung soll nur auf Unterschiede zu dem in Figur 3 dargestellten Ablauf eingegangen werden.

Figur 4 zeigt einen Testablauf bzw. den Ablauf in einem Sicherheitsmodus, der sich durch kleinere, vorsichtigere Werte $\Delta K_S$ der Schritte beim Erhöhen der insgesamt drei Pulse auszeichnet. Die Steuereinheit 13 startet den Ablauf im Sicherheitsmodus immer nach einem Zünden der Brennkraftmaschine 16. Wird beim Durchführen des Testablaufs im Sicherheitsmodus die Zahn-auf-Zahn-Stellung erfolgreich aufgelöst, speichert die Steuereinheit 13 die erfolgreiche Pulshöhe auf einem Zwischenspeicherplatz. Die Steuereinheit 13 startet dann den Sicherheitsmodus bei einem erneuten Auftreten einer Zahn-auf-Zahn-Stellung ein zweites Mal und berechnet die Kupplungssollstellung $K_S$ bzw. den Korrekturwert $K_K$ als Mittelwert aus den beiden erfolgreichen Pulshöhen abzüglich des Temperaturaufschlags $K_T$.

Figur 5 zeigt den Ablauf während der Fahrt, der sich durch einen Wert $\Delta K_D$ der Schritte beim Erhöhen der Pulse auszeichnet, der größer ist als der Wert $\Delta K$ und als der Wert $\Delta K_S$. Liegt eine Drehzahl der Brennkraftmaschine 16 nach dem Auflösen der Zahn-auf-Zahn-Stellung bereits in einem Solldrehzahlband, so schließt die Steuereinheit 13 die Kupplung vollständig, anstatt sie, wie in den oben beschriebenen Betriebssituationen, zu öffnen. Ferner ist die Pulsdauer $T_{KD}$ von der Pulsdauer $T_{K1}$ und von der Pulsdauer $T_K$ verschieden. Eine Maximalzahl der Pulse während der Fahrt ist abhängig von der Pulsdauer $T_{KD}$ bestimmt. Die Steuereinheit 13 bestimmt dadurch ein Maß des Drehmomentpulses abhängig von einem Betriebszustand des Kraftfahrzeugs. Eine Anpassung des Korrekturwerts $K_K$ erfolgt während der Fahrt nicht.

Bezugszeichen

10   Mittel
11   Verzahnung
12   Kraftfahrzeuggetriebe
13   Steuereinheit
14   Kupplung
15   Komponente
16   Brennkraftmaschine

| 17 | Sensorleitung |
|---|---|
| 18 | Steuerleitung |
| 19 | Sensor |
| 20 | Schaltgabel |
| 21 | Schaltgabel |
| 22 | Sensorleitung |
| 23 | Sensor |
| 24 | Eingangswelle |
| 25 | Vorgelegewelle |
| 26 | Ausgangswelle |
| 27 | Gang |
| 28 | Gang |
| 29 | Gang |
| 30 | Gang |
| 31 | Zahnrad |
| 32 | Zahnrad |
| 33 | Zahnrad |
| 34 | Zahnrad |
| 35 | Zahnrad |
| 36 | Schaltring |
| 37 | Schaltring |
| 38 | Zahnrad |
| 39 | Zahnrad |
| 40 | Zahnrad |
| 41 | Speichereinheit |
| 42 | CAN-Bus |
| 43 | Sensorleitung |
| 44 | Sensor |
| 45 | Aktuator |
| $K_S$ | Kupplungssollstellung |
| $K_I$ | Kupplungsweg |
| $K_0$ | Grundwert |
| $K_K$ | Korrekturwert |
| $K_T$ | Temperaturaufschlag |
| $T_K$ | Pulsdauer |
| $T_{K1}$ | Pulsdauer |
| $T_{KD}$ | Pulsdauer |
| $\Delta_K$ | Wert |
| $\Delta K_S$ | Wert |
| $\Delta K_D$ | Wert |
| $\Delta K_{Lern}$ | Inkrement |

**Patentansprüche**

1. Kraftfahrzeuggetriebesteuervorrichtung mit einem Mittel (10) zum Herstellen und/oder Lösen eines Eingriffs einer Verzahnung (11) eines Kraftfahrzeuggetriebes (12) sowie mit einer Steuereinheit (13) zum Betätigen einer Kupplung (14), wobei die Kupplung (14) zum Übertragen eines Drehmoments auf eine erste Komponente (15) der Verzahnung (11) geeignet ist und wobei die Steuereinheit (13) dazu vorgesehen ist,

- mit einem Sensor (19), mittels welchem eine Zahn-auf-Zahn-Stellung der Verzahnung (11) erkennbar ist, zu kommunizieren und
- die Kupplung (14) zum Auflösen einer Zahn-auf-Zahn-Stellung der Verzahnung (11) kurzfristig auf eine Kupplungssollstellung ($K_S$) zu verstellen, in der die Kupplung (14) einen Drehmomentpuls auf die erste Komponente (15) der Verzahnung (11) überträgt,

**dadurch gekennzeichnet, dass**

die Steuereinheit (13) dazu vorgesehen ist, die Kupplungssollstellung ($K_S$) für einen ersten Puls nach Erkennen einer Zahn-auf-Zahn-Stellung in einem nächsten Ablauf abhängig von einem durch ein Steuersignal der Steuereinheit (13) ausgelösten und von dem genannten Sensor (19) erzeugtes Reaktionssignal des Kraftfahrzeuggetriebes (12) zu adaptieren.

2. Kraftfahrzeuggetriebesteuervorrichtung nach Anspruch 1,
**dadurch gekennzeichnet, dass**
die Steuereinheit (13) dazu vorgesehen ist, die einem Drehmomentpuls zugeordnete Kupplungssollstellung ($K_S$) schrittweise zu erhöhen, bis ein Eingriff der Verzahnung (11) erreicht ist.

3. Kraftfahrzeuggetriebesteuervorrichtung nach Anspruch 2,
**gekennzeichnet durch**
eine Speichereinheit (41) zum Speichern eines beim Überschreiten eines Schwellenwerts **durch** das Reaktionssignal vorliegenden Sollkupplungswegs ($K_I$).

4. Kraftfahrzeuggetriebesteuervorrichtung nach einem der vorhergehenden Ansprüche,
**dadurch gekennzeichnet, dass**
die Steuereinheit (13) dazu vorgesehen ist, ein Maß des Drehmomentpulses abhängig von einem Betriebszustand des Kraftfahrzeuggetriebes (12) zu bestimmen.

5. Kraftfahrzeuggetriebesteuervorrichtung nach Anspruch 2,
**dadurch gekennzeichnet, dass**
die Steuereinheit (13) dazu vorgesehen ist, einen Wert ($\Delta K$, $\Delta K_S$, $\Delta K_D$) eines Erhöhungsschritts abhängig von einem Betriebszustand des Kraftfahrzeuggetriebes (12) zu bestimmen.

6. Kraftfahrzeuggetriebesteuervorrichtung nach einem der vorhergehenden Ansprüche,
**dadurch gekennzeichnet, dass**
die Steuereinheit (13) dazu vorgesehen ist, eine Adaption der Kupplungssollstellung ($K_S$) in einem Sicherheitsmodus vorzunehmen.

7. Kraftfahrzeuggetriebesteuervorrichtung nach den Ansprüchen 5 und 6,
**dadurch gekennzeichnet, dass**
die Steuereinheit (13) im Sicherheitsmodus einen verringerten Wert ($\Delta K_S$) des Erhöhungsschritts bestimmt.

8. Kraftfahrzeuggetriebesteuervorrichtung nach einem der vorhergehenden Ansprüche,
**dadurch gekennzeichnet, dass**
die Steuereinheit (13) dazu vorgesehen ist, einen Testwert der Kupplungssollstellung ($K_S$) abhängig von dem Reaktionssignal des Kraftfahrzeuggetriebes (12) zu bewerten.

9. Kraftfahrzeuggetriebesteuervorrichtung nach einem der vorhergehenden Ansprüche,
**dadurch gekennzeichnet, dass**
die Steuereinheit (13) dazu vorgesehen ist, eine Temperatur der Kupplung (14) zu erfassen und die Kupplungssollstellung ($K_S$) abhängig von der erfassten Temperatur zu korrigieren.

10. Kraftfahrzeuggetriebesteuervorrichtung nach einem der vorhergehenden Ansprüche,
**dadurch gekennzeichnet, dass**
die Steuereinheit (13) dazu vorgesehen ist, die Kupplungssollstellung (KS) selbsttätig in einem Testvorgang zu adaptieren.

11. Verfahren zum Betätigen eines Kraftfahrzeuggetriebes (12) mit einem Mittel (10) zum Herstellen und/oder Lösen eines Eingriffs einer Verzahnung (11) des Kraftfahrzeuggetriebes (12), wobei über eine Steuereinheit (13), welche mit einem Sensor (19), mittels welchem eine Zahn-auf-Zahn-Stellung der Verzahnung (11) erkennbar ist, kommuniziert, eine Kupplung (14) betätigt wird, wobei die Kupplung (14) zum Übertragen eines Drehmoments auf eine Komponente (15) der Verzahnung (11) geeignet ist und wobei zum Auflösen einer Zahn-auf-Zahn-Stellung der Verzahnung (11) die Kupplung (14) zum Erzeugen eines Drehmomentpulses kurzfristig auf eine Kupplungssollstellung ($K_S$) verstellt wird,
**dadurch gekennzeichnet, dass**
ein von dem genannten Sensor (19) erzeugtes Reaktionssignal des Kraftfahrzeuggetriebes (12) auf ein Steuersignal der Steuereinheit (13) erfasst wird und die Kupplungssollstellung (K$_S$) für einen ersten Puls nach Erkennen einer Zahn-auf-Zahn-Stellung in einem nächsten Ablauf abhängig von dem Reaktionssignal adaptiert wird.

**Claims**

1. Motor vehicle transmission control unit with means (10) for establishing and/or releasing an engagement of a toothing (11) of a motor vehicle gearbox (12) and with a control unit (13) for actuating a clutch (14), wherein the clutch (14) is suitable for transmitting a torque to a first component (15) of the toothing (11), and wherein the control unit (13) is provided in order to

   - communicate with a sensor (19) by means of which a tooth-on-tooth position of the toothing (11) is detectable, and
   - set the clutch (14), in order to release a tooth-on-tooth position of the toothing (11), temporarily to a set position (K$_S$) in which the clutch (14) transmits a torque pulse to the first component (15) of the toothing (11),

   **characterised in that**
   the control unit (13) is provided in order to adapt the clutch set position (K$_S$) for a first pulse following the detection of a tooth-on-tooth position in a next sequence in dependence on a reaction signal of the motor vehicle gearbox (12) triggered by a control signal of the control unit (13) and generated by said sensor (19).

2. Motor vehicle transmission control unit according to claim 1,
   **characterised in that**
   the control unit (13) is provided in order to increase the clutch set position (K$_S$) assigned to a torque pulse gradually until an engagement of the toothing (11) is reached.

3. Motor vehicle transmission control unit according to claim 2,
   **characterised by**
   a memory unit (41) for storing a set clutch travel (K$_r$) when the reaction signal exceeds a threshold value.

4. Motor vehicle transmission control unit according to any of the preceding claims,
   **characterised in that**
   the control unit (13) is provided in order to determine a measure of the torque pulse in dependence on an operating state of the motor vehicle gearbox (12).

5. Motor vehicle transmission control unit according to claim 2,
   **characterised in that**
   the control unit (13) is provided in order to determine a value ($\Delta K$, $\Delta K_S$, $\Delta K_D$) of an increase step in dependence on an operating state of the motor vehicle gearbox (12).

6. Motor vehicle transmission control unit according to any of the preceding claims,
   **characterised in that**
   the control unit (13) is provided in order to carry out an adaptation of the clutch set position (K$_S$) in a safety mode.

7. Motor vehicle transmission control unit according to claims 5 and 6,
   **characterised in that**
   the control unit (13) determines a reduced value ($\Delta K_S$) of the increase step in the safety mode.

8. Motor vehicle transmission control unit according to any of the preceding claims,
   **characterised in that**
   the control unit (13) is provided in order to evaluate a test value of the clutch set position (K$_S$) in dependence on the reaction signal of the motor vehicle gearbox (12).

9. Motor vehicle transmission control unit according to any of the preceding claims,
   **characterised in that**
   the control unit (13) is provided in order to detect a temperature of the clutch (14) and to correct the clutch set position (K$_S$) in dependence on the detected temperature.

10. Motor vehicle transmission control unit according to any of the preceding claims, **characterised in that** the control unit (13) is provided in order to adapt the clutch set position ($K_S$) automatically in a test process.

11. Method for operating a motor vehicle gearbox (12) with means (10) for establishing and/or releasing an engagement of a toothing (11) of the motor vehicle gearbox (12), wherein a clutch (14) is actuated by way of a control unit (13) communicating with a sensor (19) by means of which a tooth-on-tooth position of the toothing (11) is detectable, wherein the clutch (14) is suitable for transmitting a torque to a component (15) of the toothing (11), and wherein the clutch (14), in order to release a tooth-on-tooth position of the toothing (11), is temporarily set to a clutch set position ($K_S$) to transmit a torque pulse, **characterised in that** a reaction signal generated by said sensor (19) in response to a control signal of the control unit (13) is detected, and **in that** the clutch set position ($K_S$) is adapted for a first pulse following the detection of a tooth-on-tooth position in a next sequence in dependence on the reaction signal.

## Revendications

1. Dispositif de commande d'une boîte de vitesses de véhicule à moteur qui comprend un moyen (10) permettant d'établir et / ou de libérer un engrènement d'un engrenage (11) d'une boîte de vitesses (12) de véhicule à moteur ainsi qu'une unité de commande (13) destinée à actionner un embrayage (14), ledit embrayage (14) est adapté pour transmettre un couple de rotation à une première composante (15) de l'engrenage (11) et l'unité de commande (13) est prévue

   - pour communiquer avec un capteur (19) qui reconnaît une position dent sur dent de l'engrenage (11) et
   - déplacer brièvement l'embrayage (14) dans une position de référence ($K_s$) d'embrayage pour libérer une position dent sur dent de l'engrenage (11), position de référence dans laquelle l'embrayage (14) transmet une impulsion de couple de rotation à la première composante (15) de l'engrenage (11),

   **caractérisé en ce que** l'unité de commande (13) est destinée à adapter la position de référence d'embrayage ($K_s$) pour une première impulsion après la reconnaissance d'une position dent sur dent lors d'une opération suivante en fonction d'un signal de réaction de la boîte de vitesses (12) du véhicule à moteur généré par ledit capteur (19) et déclenché par un signal de commande de l'unité de commande (13).

2. Dispositif de commande d'une boîte de vitesses de véhicule à moteur selon la revendication 1, **caractérisé en ce que** l'unité de commande est destinée à augmenter progressivement la position de référence ($K_s$) d'embrayage associée à une impulsion de couple de rotation jusqu'à ce qu'un engrènement de l'engrenage (11) soit atteint.

3. Dispositif de commande d'une boîte de vitesses de véhicule à moteur selon la revendication 2, **caractérisé par** une unité de mémoire (41) destinée à mettre en mémoire un trajet d'embrayage de référence ($K_r$) existant lorsque le signal de réaction dépasse une valeur de seuil.

4. Dispositif de commande d'une boîte de vitesses de véhicule à moteur selon l'une quelconque des revendications précédentes, **caractérisé en ce que** l'unité de commande (13) est destinée à déterminer une dimension de l'impulsion de couple de rotation en fonction de l'état de fonctionnement de la boîte de vitesses (12) du véhicule à moteur.

5. Dispositif de commande d'une boîte de vitesses de véhicule à moteur selon la revendication 2, **caractérisé en ce que** l'unité de commande (13) est destinée à déterminer une valeur ($\Delta_K$, $\Delta K_S$, $\Delta K_D$) d'un incrément en fonction d'un état de fonctionnement de la boîte de vitesses (12) du véhicule à moteur.

6. Dispositif de commande d'une boîte de vitesses de véhicule à moteur selon l'une quelconque des revendications précédentes, **caractérisé en ce que** l'unité de commande (13) est destinée à adapter la position de référence ($K_s$) d'embrayage dans un mode de sécurité.

7. Dispositif de commande d'une boîte de vitesses de véhicule à moteur selon les revendications 5 et 6, **caractérisé en ce que** l'unité de commande (13) en mode de sécurité détermine une valeur réduite ($\Delta K_S$) de l'incrément.

8. Dispositif de commande d'une boîte de vitesses de véhicule à moteur selon l'une quelconque des revendications précédentes, **caractérisé en ce que** l'unité de commande (13) est destinée à évaluer une valeur de test de la position de référence ($K_s$) d'embrayage en fonction du signal de réaction de la boîte de vitesses (12) du véhicule à moteur.

9. Dispositif de commande d'une boîte de vitesses de véhicule à moteur selon l'une quelconque des revendications précédentes, **caractérisé en ce que** l'unité de commande (13) est destinée à détecter une température de l'embrayage (14) et à corriger la position de référence ($K_s$) d'embrayage en fonction de la température détectée.

10. Dispositif de commande d'une boîte de vitesses de véhicule à moteur selon l'une quelconque des revendications précédentes, **caractérisé en ce que** l'unité de commande (13) est destinée à adapter automatiquement la position de référence ($K_s$) lors d'un test.

11. Procédé permettant d'actionner une boîte de vitesses (12) de véhicule à moteur qui comprend un moyen (10) permettant d'établir et / ou de libérer un engrènement d'un engrenage (11) de boîte de vitesses (12) de véhicule à moteur, un embrayage (14) étant actionné par une unité de commande (13) qui communique avec un capteur (19) permettant de reconnaître une position dent sur dent de l'engrenage (11), ledit embrayage (14) étant adapté pour transmettre un couple de rotation à une composante (15) de l'engrenage (11) et pour libérer une position dent sur dent de l'engrenage (11), l'embrayage (14) est déplacé brièvement sur une position de référence d'embrayage ($K_s$) pour générer une impulsion de couple de rotation, **caractérisé en ce qu'**un signal de réaction de la boîte de vitesses (12) du véhicule à moteur généré par ledit capteur (19) est détecté sur un signal de commande de l'unité de commande (13) et la position de référence d'embrayage ($K_s$) est adaptée pour une première impulsion après la reconnaissance d'une position dent sur dent dans une opération suivante en fonction du signal de réaction.

Fig. 1

**Fig. 2**

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6769523 B2